# EUROPÄISCHE PATENTSCHRIFT

(11) **EP 0 502 070 B1**
(45) Veröffentlichungstag und Bekanntmachung des Hinweises auf die Patenterteilung: **14.09.1994**
(21) Anmeldenummer: 91900022.4
(22) Anmeldetag: 20.11.1990
(51) Int. Cl.: C07F 9/40, C07F 9/6571

(54) **VERFAHREN ZUR OXIDATION VON 2-HYDROXY-ÄTHYLPHOSPHONSÄUREDIESTERN**
PROCESS FOR OXIDISING 2-HYDROXY ETHYL PHOSPHONIC ACID DIESTERS
PROCEDE D'OXYDATION DES DIESTERS DE L'ACIDE HYDROXY-2-ETHYLPHOSPHONIQUE

(30) Priorität: 27.11.1989 DE 3939142
(43) Veröffentlichungstag der Anmeldung: 09.09.1992
(73) Patentinhaber: HOECHST AKTIENGESELLSCHAFT, 65926 Frankfurt am Main (DE)
(72) Erfinder: LEUPOLD, Ernst, Ingo, D-6392 Neu-Anspach (DE); ROSCHER, Günter, D-6233 Kelkheim (DE)
(86) Internationale Anmeldenummer: EP9001980
(87) Internationale Veröffentlichungsnummer: WO9108210

(56) Entgegenhaltungen:
- US-A- 4 151 172

## Beschreibung

Die vorliegende Erfindung betrifft ein Verfahren zur Herstellung von Carboxymethylphosphonsäureestern durch Oxidation der entsprechenden 2-Hydroxyäthylphosphonsäurediester mit Sauerstoff in Gegenwart eines Katalysators.

Carboxymethylphosphonsäurediester können als Komplexbildner eingesetzt werden oder als Zwischenprodukte bei der Herstellung von phosphororganischen Produkten.

Es ist bekannt, Carboxymethylphosphonsäurediäthylester durch Erhitzen von Chloressigsäure-benzylester mit Triäthylphosphit und nachfolgende Hydrogenolyse des als Zwischenprodukt erhaltenen Benzylesters der Carboxymethylphosphonsäurediäthylester herzustellen. Carboxymethylphosphonsäure-di-n-butylester war in einer analogen Weise hergestellt worden. (D.J. Martin, C.E. Griffin, J. Org. Chem. 30 [1965] 4034). Carboxymethylphosphonsäurediäthylester konnte auch aus dem entsprechenden Äthylester durch partielle Hydrolyse mit einer äquimolaren Menge an KOH in wäßrigem Äthanol hergestellt werden. Der entsprechende Dimethylester ließ sich aus dem Methylester der Carboxymethylphosphonsäuredimethylester durch partielle Verseifung mit KOH in Methanol herstellen und der entsprechende Di-n-butylester aus dem Tributylester durch partielle Verseifung mit wäßrigem KOH (R.A. Malevannaya et al., Zh. Obshch. Khim. 41 [1971] 1426-1434)

Bei der Hydrolyse der Triester der Carboxymethylphosphonsäure in alkalischem Medium entstehen jedoch häufig Nebenprodukte, denn neben der Estergruppe kann auch die P-Alkoxy-Gruppe hydrolytisch gespalten werden. Bei Verwendung von KOH führt die nachfolgende Aufarbeitung außerdem zur Bildung einer stöchiometrischen Menge an Salz, dessen Entsorgung Probleme bereitet.

Es bestand daher die Aufgabe, ein Verfahren zu entwickeln, das Carboxymethylphosphonsäurediester in hoher Ausbeute und Reinheit liefert, ohne daß dabei große Mengen an unerwünschtem Salz anfallen. Mit der vorliegenden Erfindung wird ein solches Verfahren nunmehr zur Verfügung gestellt.

Gegenstand der vorliegenden Erfindung ist ein Verfahren zur Herstellung von Carboxymethylphosphonsäurediestern der allgemeinen Formel (RO)₂P(O)CH₂CO₂H, worin R einen geradkettigen oder verzweigten Alkylrest mit 1 bis 20 C-Atomen, vorzugsweise mit 1 bis 8 C-Atomen, einen cycloaliphatischen Rest mit 5 bis 8 C-Atomen, einen Phenyl- oder Naphthylrest, der substituiert sein kann, einen Aralkylrest mit 7 bis 10 C-Atomen, darstellt oder worin die (RO)₂P-Gruppe einen Ring bildet, der 2 bis 5 C-Atome enthält, die substituiert sein können, das dadurch gekennzeichnet ist, daß 2-Hydroxyäthylphosphonsäurediester der allgemeinen Formel (RO)₂P(O)CH₂CH₂OH, worin R die obengenannte Bedeutung hat, mit Sauerstoff in Gegenwart von Wasser und einem Katalysator, der mindestens ein Metall aus der Gruppe der Platinmetalle enthält, umgesetzt wird.

Die Substituenten am Phenyl- oder Naphthylrest sind vorzugsweise ein oder mehrere Alkylreste mit 1 bis 6 C-Atomen, Alkoxy mit 1 bis 6 C-Atomen oder Halogen, vorzugsweise Chlor oder Brom. Als Alkyl- oder cycloaliphatischer Rest kann R auch Heteroatome, vorzugsweise Sauerstoff oder Stickstoff, enthalten.

Als Metalle aus der Gruppe der Platinmetalle, seien z.B. genannt Platin, Palladium, Iridium, Rhodium und Ruthenium, wobei Palladium und/oder Platin bevorzugt sind. Besonders bevorzugt sind Katalysatoren, die als Metall der Platingruppe ausschließlich Platin enthalten.

Die genannten Metalle sind vorzugsweise auf einem Träger, insbesondere Aktivkohle, aufgebracht. Der Gewichtsanteil der Metalle beträgt dabei zweckmäßig 1 bis 10 % des Gesamtgewichts des Katalysators. Geeignete Katalysatoren sind beispielsweise handelsübliche Katalysatoren mit 5 bis 10 Gew.-% Platin auf Aktivkohle.

In dem erfindungsgemäßen Verfahren wird zweckmäßig so viel Wasser zu dem Ausgangsmaterial gegeben, daß der Gehalt an Hydroxy-äthylphosphonsäure-dialkylester in der entstehenden Lösung bei 5 bis 30 Gew.-%, vorzugsweise bei 10 bis 20 Gew.-% liegt.

Bevorzugtes Oxidationsmittel ist reiner Sauerstoff. Es können jedoch auch Gemische von Sauerstoff mit unter den Reaktionsbedingungen gegenüber den an der Reaktion beteiligten Verbindungen inerten Gasen verwendet werden, z.B. in Form von Luft, beispielsweise Mischungen von Sauerstoff mit Inertgasen oder mit Luft.

Der Gesamtdruck liegt im allgemeinen zwischen 0,5 und 100 bar. Mit steigendem Sauerstoff-Parialdruck nimmt die Reaktionsgeschwindigkeit deutlich zu. Die Vorteile, die die erhöhte Reaktionsgeschwindigkeit bei erhöhtem O₂-Partialdruck bietet, können jedoch durch den dann wesentlich größeren apparativen Aufwand mindestens wettgemacht werden. Günstig ist ein Gesamtdruck von 1 bis 10 bar, wobei das Arbeiten unter Atmosphärendruck besonders einfach ist.

Das erfindungsgemäße Verfahren wird in der Regel bei einer Temperatur von 30 °C bis zum Siedepunkt des wäßrigen Mediums, vorzugsweise von 50 bis 95 °C, insbesondere 60 bis 90 °C, durchgeführt.

Das erfindungsgemäße Verfahren verläuft in einem Dreiphasensystem aus festem Katalysator, wäßrigem Medium und gasförmigem Sauerstoff. Es kann in allen Apparaturen, die sich für die Durchführung von Reaktionen in der flüssigen Phase mit oder ohne Anwendung von Überdruck eignen, durchgeführt werden. Beispiele dafür sind die Durchführung in einem Rührkessel oder in einer Blasensäule mit suspendiertem Katalysator. Die Oxidation kann aber auch an einem Festbett mit gekörntem Katalysator in einem Rieselphasenreaktor durchgeführt werden.

Die für die Bildung des jeweils gewünschten Reaktionsproduktes erforderliche Reaktionszeit wird zweckmäßig dadurch bestimmt, daß man in gewissen Zeitabständen Proben des flüssigen Reaktionsgemisches entnimmt und analysiert. Beispielsweise kann die Ausbeute an Reaktionsprodukt auf einfache Weise durch Analyse einer Probe mit Hilfe der Hochdruckflüssigkeits-Chromatographie im Vergleich zu Standardlösungen laufend bestimmt werden. Es ist zu empfehlen, die Reaktionsbedingungen so zu optimieren, daß die Reaktionszeit möglichst kurz ist, da eine unnötig verlängerte Einleitung von Sauerstoff zu Überoxidationen, beispielsweise zu Decarboxylierungen, und damit zum Verlust an Ausbeute an dem gewünschten Reaktionsprodukt führen kann.

Die Ausgangsstoffe für das erfindungsgemäße Verfahren sind bekannt oder lassen sich nach im Prinzip bekannten Verfahrensweisen herstellen, vgl. z.B. Chelientsev, Kuskov, Zhur. Obsh. Chei Khim., 16, [1946], 1481.

Das Reakionsgemisch kann nach üblichen Methoden aufgearbeitet werden. In einem geeigneten Verfahren wird zunächst das Wasser destillativ entfernt. Eine anschließende Reinigung ist im allgemeinen nicht erforderlich; die Reinheiten liegen oberhalb 90 %.

Das erfindungsgemäße Verfahren besitzt gegenüber den anfangs genannten herkömmlichen Verfahren den Vorteil, daß die Bildung unerwünschter Produkte, wie anorganischer Salze, vermieden wird. Bei der erfindungsgemäßen katalytischen Oxidation entsteht neben den gewünschten Produkten zwangsweise nur noch Wasser, das ohnehin im Reaktionsmedium vorhanden ist.

### Beispiele

1. In ein von außen beheiztes senkrecht angeordnetes Glasrohr (Durchmesser 50 mm, Länge 1200 mm), das mit einer Mischung aus 182 g Hydroxyäthylphosphonsäurediäthylester, 728 g Wasser und 45 g eines handelsüblichen Katalysators (5 % Platin auf Aktivkohle) gefüllt war, leitete man von unten durch eine Glasfritte 80 NL/h Sauerstoff bei 80 °C ein. Nach 9 Stunden enthielt die Reaktionslösung 157 g Carboxymethylphosphonsäurediäthylester, entsprechend einer Ausbeute von 86 % der Theorie.
2. Analog Beispiel 1 werden 154 g Hydroxyäthylphosphonsäuredimethylester 12 Stunden bei 60 °C umgesetzt. Das Reaktiongemisch enthielt 160 g Carboxymethylphosphonsäuredimethylester, entsprechend einer Ausbeute von 95 % der Theorie.

## Patentansprüche

1. Verfahren zur Herstellung von Carboxymethylphosphonsäurediestern der allgemeinen Formel (RO)₂P(O)CH₂CO₂H, worin R einen geradkettigen oder verzweigten Alkylrest mit 1 bis 20 C-Atomen, einen cycloaliphatischen Rest mit 5 bis 8 C-Atomen, einen Phenyl- oder Naphthylrest, der substituiert sein kann, einen Aralkylrest mit 7 bis 10 C-Atomen, darstellt oder worin die (RO)₂P-Gruppe einen Ring bildet, der 2 bis 5 C-Atome enthält, die substituiert sein können, dadurch gekennzeichnet, daß 2-Hydroxy-äthylphosphonsäure-diester der allgemeinen Formel (RO)₂P(O)CH₂CH₂OH, worin R die obengenannte Bedeutung hat, mit Sauerstoff in Gegenwart von Wasser und einem Katalysator, der mindestens ein Metall aus der Gruppe der Platinmetalle enthält, umgesetzt wird.

2. Verfahren nach Anspruch 1, dadurch gekennzeichnet, daß R einen Alkylrest mit 1 bis 8 C-Atomen darstellt.

3. Verfahren nach Anspruch 1 oder 2, dadurch gekennzeichnet, daß der Katalysator Platin und/oder Palladium, insbesondere nur Platin enthält.

4. Verfahren nach einem oder mehreren der Ansprüche 1 bis 3, dadurch gekennzeichnet, daß der Katalysator aus 1 bis 10 Gew.-% mindestens eines Metalls aus der Gruppe der Platinmetalle und einem Trägermaterial, vorzugsweise Aktivkohle, besteht.

5. Verfahren nach einem oder mehreren der Ansprüche 1 bis 4, dadurch gekennzeichnet, daß die Umsetzung in Gegenwart von so viel Wasser durchgeführt wird, daß der Gehalt an Hydroxy-äthylphosphonsäure-dialkylester in der entstehenden Lösung 5 bis 30 Gew.-%, vorzugsweise 10 bis 20 Gew.-% beträgt.

6. Verfahren nach einem oder mehreren der Ansprüche 1 bis 5, dadurch gekennzeichnet, daß man bei einem Gesamtdruck von 0,5 bis 100 bar, bevorzugt bei 1-10 bar, besonders bevorzugt bei Atmosphärendruck, arbeitet.

7. Verfahren nach einem oder mehreren der Ansprüche 1 bis 6, dadurch gekennzeichnet, daß der Sauerstoff im Gemisch mit einem unter den Reaktionsbedingungen gegenüber den an der Reaktion beteiligten Verbindungen inerten Gas verwendet wird.

8. Verfahren nach einem oder mehreren der Ansprüche 1 bis 7, dadurch gekennzeichnet, daß die Umsetzung bei einer Temperatur von 30 °C bis zum Siedepunkt des wäßrigen Mediums, bevorzugt bei 50 bis 95 °C, besonders bevorzugt bei 60 bis 90 °C durchgeführt wird.

## Claims

1. Process for the preparation of diesters of carboxymethylphosphonic acid of the formula (RO)₂P(O)CH₂CO₂H, in which R is a straight-chain or branched alkyl radical having 1 to 20 carbon atoms, a cycloaliphatic radical having 5 to 8 carbon atoms, a phenyl or naphthyl radical which can be substituted, an aralkyl radical having 7 to 10 carbon atoms, or in which the (RO)₂P group forms a ring which contains 2 to 5 carbon atoms which can be substituted, characterized in that diesters of 2-hydroxyethylphosphonic acid of the formula (RO)₂P(O)CH₂CH₂OH, in which R has the abovementioned meaning, are reacted with oxygen in the presence of water and a catalyst which contains at least one metal selected from the platinum metals group.

2. Process according to Claim 1, characterized in that R is an alkyl radical having 1 to 8 carbon atoms.

3. Process according to Claim 1 or 2, characterized in that the catalyst contains platinum and/or palladium, in particular only platinum.

4. Process according to one or more of Claims 1 to 3, characterized in that the catalyst comprises 1 to 10% by weight of at least one metal selected from the platinum metals group and a support material, preferably activated charcoal.

5. Process according to one or more of Claims 1 to 4, characterized in that the reaction is carried out in the presence of a quantity of water such that the content of dialkyl ester of hydroxyethylphosphonic acid in the resulting solution is 5 to 30% by weight, preferably 10 to 20% by weight.

6. Process according to one or more of Claims 1 to 5, characterized in that a total pressure of 0.5 to 100 bar is employed, preferably 1-10 bar, particularly preferably atmospheric pressure.

7. Process according to one or more of Claims 1 to 6, characterized in that the oxygen is used in a mixture with a gas inert to the reactants under the reaction conditions.

8. Process according to one or more of Claims 1 to 7, characterized in that the reaction is carried out at a temperature of 30°C up to the boiling point of the aqueous medium, preferably at 50 to 95°C, particularly preferably at 60 to 90°C.

## Revendications

1. Procédé pour préparer des diesters de l'acide carboxyméthylphosphonique de formule générale (RO)₂P(O)CH₂CO₂H, où R est un radical alkyle à chaîne droite ou ramifiée ayant de 1 à 20 atomes de C, un radical cycloaliphatique ayant de 5 à 8 atomes de C, un radical phényle ou naphtyle qui peut être substitué, un radical aralkyle ayant de 7 à 10 atomes de C, ou dans laquelle le groupe (RO)₂P forme un cycle qui comporte de 2 à 5 atomes de C, qui peut être substitué, le procédé étant caractérisé en ce que l'on fait réagir les diesters de l'acide 2-hydroxyéthylphosphonique de formule générale (RO)₂P(O)CH₂CH₂OH, où R a la signification précédente, avec l'oxygène en présence d'eau et d'un catalyseur qui comporte au moins un métal du groupe des métaux du platine.

2. Procédé selon la revendication 1, caractérisé en ce que R est un radical alkyle ayant de 1 à 8 atomes de C.

3. Procédé selon la revendication 1 ou 2, caractérisé en ce que le catalyseur comporte du platine et/ou du palladium, en particulier seulement du platine.

4. Procédé selon une ou plusieurs des revendications 1 à 3, caractérisé en ce que le catalyseur est constitué de 1 à 10% en poids d'au moins 1 métal du groupe des métaux du platine, et d'une matière support, de préférence du charbon actif.

5. Procédé selon une ou plusieurs des revendications 1 à 4, caractérisé en ce que la réaction est effectuée en présence d'une quantité d'eau suffisante pour que la teneur en ester diéthylique de l'acide hydroxyéthylphosphonique dans la solution obtenue soit de 5 à 30% en poids, de préférence de 10 à 20% en poids.

6. Procédé selon une ou plusieurs des revendications 1 à 5, caractérisé en ce que l'on travaille à une pression totale de 0,5 à 100 bars, de préférence à 1-10 bars, et de façon particulièrement préférée à la pression atmosphérique.

7. Procédé selon une ou plusieurs des revendications 1 à 6, caractérisé en ce que l'on utilise l'oxygène en mélange avec un gaz inerte dans les conditions de réactions vis-à-vis des composés qui participent à la réaction.

8. Procédé selon une ou plusieurs des revendications 1 à 7, caractérisé en ce que la réaction s'effectue à une température allant de 30° C juqu'au point d'ébullition du milieu aqueux, de préférence de 50 à 95° C, de façon particulièrement préférée à 60-90°C.
